# EUROPEAN PATENT SPECIFICATION

(11) **EP 4 192 908 B1**
(45) Date of publication and mention of the grant of the patent: **24.07.2024**
(21) Application number: 21761987.3
(22) Date of filing: 05.08.2021
(51) Int. Cl.: C08K 3/34, C08L 61/06, B32B 21/08, C09J 161/06

(54) **ADHESIVE COMPOSITION FOR MAKING WOOD LAMINATES, WOOD LAMINATES AND PROCESSES FOR THE PREPARATION THEREOF**
KLEBSTOFFZUSAMMENSETZUNG ZUR HERSTELLUNG VON HOLZLAMINATEN
COMPOSITION ADHÉSIVE POUR FABRIQUER DES STRATIFIÉS EN BOIS

(30) Priority: 05.08.2020 EP 20189643
(43) Date of publication of application: 14.06.2023
(73) Proprietor: Metadynea Austria GmbH, 3500 Krems (AT)
(72) Inventor: KANTNER, Wolfgang, 3900 Schwartzenau (AT)
(74) Representative: Hoyng Rokh Monegier B.V.
(86) International application number: PCT/EP2021/071846
(87) International publication number: WO 2022/029215

(56) References cited:
- CN-A- 110 157 146
- US-A- 4 425 178
- US-A- 4 441 954

## Description

### BACKGROUND OF THE INVENTION

### 1. Field of the Invention

The invention relates to an adhesive composition for making wood laminates, to wood laminates and to a process for the manufacture of the adhesive composition and for the manufacture of the wood laminates. Wood laminates are also referred to as plywood or veneer.

### 2. Description of the Related Art

A wide variety of adhesives and processes are known for preparing wood laminates. Among the most widely used adhesives are phenol-aldehyde condensation products, typically phenol-formaldehyde (PF) and phenol urea formaldehyde (PUF). Typically, these adhesives are applied to wood plies and the plies are then subjected to a pressing operation to consolidate them into a unitary panel and cure the adhesive. The adhesive compositions are typically water-based and comprise a binder resin, typically also a hardener, optionally a curing catalyst. The adhesive composition can be modified with extenders, such as starch, wood flour, nutshell flour, with fillers, such as clays, to modify the properties but also to reduce production time and reduce cost.

Waage et al (in Journal of Applied Polymer Science 42:273-278, 1991) describe the effects of fillers and extenders on the curing properties of phenol-formaldehyde resin as determined by the application of thermal techniques. Clay minerals were used to improve the curing behaviour of phenolic plywood resins, but the effect was small and increased viscosity had detrimental consequences in the application of the resins.

Zeppenfeld & Grunwald (in Klebstoffe in der Holz- und Möbelindustrie. DRW-Verlag ISBN-10: 3871813591 and ISBN-13: 978-3871813597, 2005) describe several inert fillers, such as flat mica and talc, that can be added to resins. However, these fillers show bad wettability and tend to agglomerate and sediment, which is a disadvantage in a glue as it is required that a glue mix is homogenous. Some inorganic fillers have the potential to increase the viscosity of the glue a lot, others induce thixotropic behaviour. Both effects are problematic in the application process for plywood.

Lecka et al (in Ann WULS - SGGW, For and Wood Technol 83:191-195, 2013; 'Effect of addition of titanium dioxide and talc on properties of phenolic resin and water-resistant plywood') used talc to partly substitute titanium dioxide as pigment in birch plywood bonded with phenolic resin.

Doosthoseini et al (in Journal of the Indian Academy of Wood Science 7: 58, 2011; 'Using Na+MMT nano-clay as a secondary filler in plywood manufacturing') used small amounts of sodium montmorillonite nano-clay (up to 7.5 wt.%) together with urea formaldehyde (UF) resin and hardener.

Lei et al. (in Journal of Applied Polymer Science 109:2442-2451, 2008; 'Influence of nano-clay on urea-formaldehyde resins for wood adhesives and its model') used the same filler (up to 8 wt.%) with UF resin and replaced that with wheat flour.

Lei et al. (in Journal of Adhesion Science and Technology 24:1567-1576, 2010, 'Influence of Nano-clay on Phenol-Formaldehyde and Phenol-Urea-Formaldehyde Resins for Wood Adhesives'). extended the investigations of nano-clay montmorillonite (addition rate 1-5 wt.%) to phenol formaldehyde (PF) resins and PUF resins.

Nanosilica was used by several groups as additive for amino resin bonded plywood boards. Dukarska et al (in Journal of Polymer Research 23: 1-8, 2016; 'The effect of organofunctional nanosilica on the cross-linking process and thermal resistance of UF resin'). Lin et al (in Frontiers of Forestry in China 1 :230, 2006; 'Property of nano-SiO2/urea formaldehyde resin'). Moezzipour et al (in Journal of the Indian Academy of Wood Science 10:118-124, 2013; 'The effect of different kinds of nanosilica on practical properties of plywood').

Riegler et al (in Holztechnologie 3:10-14, 2019; `Funktionsorientierte Holzwerkstoffe durch "intelligente Additive) investigated effects of minor amounts of silicate particle additives in UF binder resin on particle board properties.

Hartman et al describe in US patent US4441954 Phenol-Aldehyde Bentonite Adhesive Composition and a process for making wood laminates. Phenol formaldehyde resin was used with colloidal, acicular magnesium aluminum silicate clay like bentonite in amounts of 5-50%.

Wang et al describe in US patent application US2008/0234423 phyllosilicate modified resins for lignocellulosic fibre-based composite panels. A fine phyllosilicate clay dispersed in duroplastic resin was used together with lignocellulose fibers for making Oriented Strand Board (OSB) and Medium density fiberboard (MDF). Wang does not describe plywood adhesive.

US4425178 describes a cold-curing aqueous wood bonding adhesive system comprising a resin composition based on phenol resorcinol resin to be mixed with a hardener composition comprising paraformaldehyde or alpha-polyoxymethylene, acid and a small amount of fillers and thickeners which may include wood flour, nutshell flour, non-swelling clays such as kaolinite and thickeners such as attapulgite clay, montmorillonite clay and pyrogenic silica.

CN110157146 describes an aqueous composition comprising modified phenol-formaldehyde resin and comprising water glass (a silicate). A composition is described comprising a small amount of nano-sericite having a particle size of 10 nanometers and copper powder for hardness and toughness.

Although many different particles filled adhesive compositions have been described for wood laminates, there is still a desire for an adhesive composition for wood laminates that is less expensive and results in wood laminates having good mechanical properties and water resistance properties, in particular to meet the class 3 plywood classification in shear strength requirements after boiling in water in accordance with standard EN 314.

### DESCRIPTION OF THE INVENTION

The present invention addresses these problems by providing an adhesive composition for the manufacture of a wood laminate comprising two or more wood layers alternating with one or more adhesive layers, wherein the adhesive composition comprises a phenol formaldehyde adhesive resin solution in water and a particulate filler comprising a non-swellable phyllosilicate, the particulate filler having an average grain size d50 (determined by a Micromeretics Sedigraph 5120) ranging between 1 and 20 µm preferably between 2 and 15 µm and more preferably between 3 and 10 µm, the adhesive composition comprising an amount of between 20 and 80 wt.%, preferably between 30 and 80 wt.%, more preferably between 40 and 80 wt.% even more preferably between 40 and 70 wt.% of the particulate filler relative to the total dry solids weight of the particulate filler and the phenol formaldehyde adhesive resin.

The phyllosilicate particulate filler used in the adhesive composition of the invention must be non-swellable. The phyllosilicates types are classified, and it can be found in literature whether a phyllosilicate is water swellable or not. Phyllosilicates like nano-clays, that are often used as fillers in adhesive compositions are water swellable as they bind water molecules to free surfaces by electrostatic attraction from mineral lattice charge deficiencies. Mildly swelling phyllosilicates like Vermiculite are not considered non-swelling. The inventors found that non-swellable phyllosilicates with the specified low particle size can be used in relatively high amounts in the adhesive composition without compromising stability and handling properties of the adhesive compositions and resulting in strong and less expensive wood laminate products. It is surprising that addition of a chemically inert particulate filler in such high amounts, in particular that replacing the adhesive binder resin in such high percentage, does not deteriorate the strength properties, but instead can sometimes even increase strength properties.

In the adhesive composition according to the invention the non-swellable phyllosilicate preferably is natural or synthetic non-swellable mica or talc, preferably natural mica chosen from the group consisting of muscovite, phlogopite, iron mica, biotite and sericite or artificial mica chosen from the group consisting of fluorine phlogopite mica, potassium tetra-silicon mica and calcined natural mica, more preferably the non-swellable phyllosilicate is muscovite and phlogopite and most preferably muscovite.

In nature the non-swellable phyllosilicate rarely occurs in pure form. Usually a mineral material is found that comprises non-swellable phyllosilicate material which then optionally can be purified to increase the amount of the non-swellable phyllosilicate and can be ground to reduce the particle size. The non-swellable phyllosilicate itself can have a variation in composition; for example, the preferred non-swellable phyllosilicate muscovite may comprise limited amounts of Mg²⁺ and Fe²⁺ as solid solutions. These solid solutions are called "phengites". Apart of the non-swellable phyllosilicate (preferably muscovite or phengite), the particulate filler may comprise other mineral components. Preferably the mineral co-components in the particulate filler are also non-swellable, for example quartz or chlorite.

Preferably, the particulate filler is a mineral material comprising at least 20 wt.%, preferably at least 30 wt.%, more preferably at least 40 wt.% and even more preferably at least 50, 75 or even at least 90 wt.% of the non-swellable phyllosilicate relative to the total weight of the particulate filler. Preferably, the adhesive composition comprises an amount of the non-swellable phyllosilicate of at least 20 wt.%, preferably at least 30 wt.%, more preferably at least 40 wt.% and even more preferably at least 50 or even at least 75 wt.% relative to the total dry weight of the non-swellable phyllosilicate and the adhesive resin.

The chemical composition of the particulate filler can be characterised in known ways, for example with X-Ray fluorescence or scanning electron microprobes, and is published for many mineral materials. The preferred phyllosilicate is muscovite and preferably comprises 40 - 80 wt.% SiO₂, 10 - 40 wt.% Al₂O₃ and 4 - 10% K₂O and optional minor amounts of other elements like for example Magnesium and Iron. A preferred particulate filler is phengite.

It was found that the particle size is important. Mineral material comprising the non-swellable phyllosilicate typically may have very large crystal size and is ground and sieved to the specified particle size range described above. The particulate filler has an average grain size d50 (determined by a Micromeretics Sedigraph 5120) ranging between 1 and 20 µm, preferably between 2 and 15 µm and more preferably between 3 and 10 µm. Preferably, the particle size distribution determined by a Micromeretics Sedigraph 5120 is characterized by a d98 between 15 and 25 µm, a d90 between 5 and 15 µm, a d50 between 2 and 20 µm and a d30 between 1 and 5 µm. Preferably, the d50 is between 2 and 15 µm, more preferably between 3 and 10 µm.

The adhesive composition according to the invention is prepared by mixing the particulate filler with a phenol formaldehyde resin solution in water. The phenol formaldehyde resin solution is characterized by having
a) a dry solids weight of phenol formaldehyde resin relative to the total weight of the phenol formaldehyde resin solution is between 30 and 70 wt.%, preferably between 35 and 60 wt.%, more preferably between 40 and 55 wt.% (measured after 3 hours oven drying at 105°C),
b) a free alkalinity between 3 and 10 wt.% preferably between 4 and 9 wt.% and more preferably between 5 and 8 wt.% as determined by acid titration and expressed as gr NaOH per 100 gr of the phenol formaldehyde resin solution x 100%.
c) a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s.

Free alkalinity means alkalinity that is not bound and is determined by HCl titration to an equilibrium point at pH = 6.5. The moles of acid titrated to that equilibrium point is taken to correspond to the moles of free alkalinity. The free alkalinity is expressed as the corresponding amount in gr NaOH per 100 gr of the phenol formaldehyde resin solution x 100%. It is noted that the free alkalinity is lower than the total alkalinity, which corresponds to the amount of alkaline material added, and which also includes alkalinity that is bound for example to the phenol.

In the adhesive composition a part of the PF resin is replaced with the specified mineral filler as described above and the total dry solids weight of the particulate filler and phenol formaldehyde resin is in the same range as the ranges specified above for the phenol formaldehyde resin solids content. The free alkalinity of the adhesive composition is lower compared to the free alkalinity of the PF resin solution because of the gravimetric dilution by the particulate filler and thus the range of free alkalinity in the adhesive composition is in the range from of 0.5 - 9 wt.%. The viscosity of the adhesive composition including the particulate filler is to some extent determined by the indicated viscosity of the PF resin used but also by the particulate fillers, in particular by the particle size thereof, and by optional other additives. The skilled person choses the viscosity also in view of application method parameters. Typically, the viscosity of the adhesive composition e.g. for roller application is in the range between 300 and 500 mPas (as determined with a plate-plate viscometer at 20°C and a shear rate of 1053/s using Cylinder PP50 at a duration of measurement of 20 sec.

The adhesive composition preferably consists of the particulate filler, the phenol formaldehyde resin solution in water and one or more optional additives in a total amount ranging between 0 and 30 wt.%, preferably between 0 and 20 wt.%, more preferably between 1 and 20 wt.% relative to the total weight of the adhesive composition, wherein the further additives are preferably chosen from the list consisting of other fillers, pigments, hardeners, curing catalyst, preferably one or more further additives chosen from the list consisting of starch, wood flour, nutshell flour, chalk. Typically, the water content in the adhesive composition ranges between 20 and 80 wt.%, preferably between 25 and 70 wt.% more preferably between 30 and 60 wt.% the remainder being the total solids content. The water content in the adhesive composition can vary depending on the application method. Different replacement rate of the phenol formaldehyde by phyllosilicate containing particulate filler and different grain sizes may need different amounts of water to achieve a viscosity optimized for the given application method. A preferred application method is roller application the preferred rage is between 30 and 50 wt.% for a replacement rate of 40 - 60 wt% of the phenol formaldehyde by phyllosilicate containing particulate filler, preferably muscovite containing particulate filler having particle size between 3 and 10 micrometer.

In another aspect the invention relates to a process for the manufacture of the adhesive composition according to the invention anyone comprising the steps of
I. providing a phenol-formaldehyde resin solution in water
   a) wherein the dry solids weight of phenol-formaldehyde resin relative to the total weight of the resin and water is between 30 and 70 wt.%, preferably between 35 and 60 wt.%, more preferably between 40 and 55 wt.% (measured after 3 hours oven drying at 105°C),
   b) having a free alkalinity between 3 and 10 wt.%, preferably between 4 and 9 wt.% and more preferably between 5 and 8 wt.% as determined by acid titration and expressed as gr NaOH per 100 gr of the adhesive composition x 100%,
   c) having a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s,
II. providing particulate filler comprising a non-swellable phyllosilicate, the particulate filler having an average grain size d50 (determined by a Micromeretics Sedigraph 5120) ranging between 1 20 µm, preferably between 2 and 15 µm and more preferably between 3 and 10 µm,
III. optionally providing additives in a total amount of no more than 30 wt.% relative to the total weight of the adhesive composition,
IV. mixing the phenol-formaldehyde resin solution with the particulate filler and optional additives in relative amounts such that the adhesive composition comprises an amount between 20 and 80 wt.%, preferably between 30 and 80 wt.%, more preferably between 40 and 80 wt.% even more preferably between 40 and 70 wt.% of the particulate filler relative to the total dry solids weight of the adhesive resin and particulate filler.

In yet another aspect the invention relates to a process for the manufacture of a wood laminate comprising the step of
a. providing two or more wood layers, which wood layers are between 0.5 and 3 mm thick,
b. providing the adhesive composition according to the invention,
c. applying one or more layers of the adhesive composition on at least one surface of the two or more wood layers in an amount of between 100 and 200 gr/m², preferably between 100 and 160 gr/m², more preferably between 110 and 160 gr/m², even more preferably between 110 and 140 gr/m²,
d. stacking the two or more wood layers alternating with the one or more adhesive layers forming an uncured wood laminate stack,
e. optionally allowing the adhesive composition to penetrate into the wood and partially dry, preferably for at least 5, 7 or at least 10 minutes,
f. pressing and curing the uncured wood laminate stack to form the wood laminate in one or more separate pressing steps,
   a. at a pressing temperature between 90 and 150 °C, preferably between 100 and 140 °C, more preferably between 110 and 140 °C,
   b. preferably at a pressure between 10 and 200 N/cm² and
   c. preferably for a total time of at least 2 minutes,
   d. wherein the pressing is preferably done at constant temperature and with at least one step at a pressure between 100 and 200 N/cm² for at least 2 minutes.

The amount of adhesive composition applied on a surface of the wood layers is chosen to be high enough to provide sufficient bonding between the adjacent wood layers and preferably is at least 100 gr/m² , preferably at least 110 gr/m² and more preferably at least 120 gr/m² but is on the other hand preferably as low as possible in particular in view of cost of the adhesive resin, so preferably at most 200 gr/m², more preferably at most 180 and even more preferably at most 160 gr/m². An advantage of the invention is that not only less adhesive resin is applied due to the replacement of resin by the particulate filler, but that even a lower amount (in weight per surface area) of the adhesive resin can be applied while still achieving a good bond strength, so good results are obtained when the amount applied is between 100 and 160 gr/m² and more preferably even between 100 and 140 gr/m². The amount given above is typical for roller application of the adhesive. In case of spray application, but other application methods can be used as well using the above amounts ranges. A particular advantage of the invention is that the amount of resin applied to the surface of the wood layers can be low. Preferably, the amount of resin applied to the surface is between 10 and 60 gr/m², preferably between 15 and 55 gr/m² , more preferably between 20 and 50 gr/m² even more preferably between 20 and 40 gr/m² Preferably, the total amount of solids applied to the surface is between 20 and 120 gr/m², preferably between 40 and 110 gr/m² , more preferably between 50 and 100 gr/m² even more preferably between 40 and 90 gr/m² . A lower amount of resin results in a correspondingly lower ecologic footprint and lower formaldehyde emissions.

A typical procedure for the manufacture of a wood laminate comprises a lay-up time between 5 and 20 min, preferably between 7 and 15 min, most preferably about 10 min and an open time between 5 and 20 min, preferably between 7 and 15 min, most preferably about 10 min. The lay-up time is the time needed for applying the adhesive on the veneers and stapling them. The open time is the time before the pile of stapled veneers is put into the hot press.

Preferably, the pressing is done with press platens kept at a substantially constant temperature and pressing is done in one step or two or more pressing steps with different pressures. It is easiest to keep the temperature of the press platen constant and to vary the pressure. Preferably, the constant press platen temperature is chosen between 90 and 150°C, more preferably between 100 and 140°C even more preferably between 110 and 130°C, typically about 125°C and pressing pressure is changed in two or more steps with each step preferably between 0.5 and 10 minutes and in total at least 2 minutes to allow sufficient compressing and curing. Preferably, the pressing pressure is lowered in each subsequent step. For example, good results were obtained with pressing at 125°C in 3 consecutive steps for 4 + 4 + 1 min at a pressure of 150 / 60 / 30 N/cm² respectively.

The invention also relates to a wood laminate comprising two or more wood layers alternated with one or more adhesive layers of the dried and cured adhesive composition according to the invention, wherein the dried and cured adhesive layer has an average thickness between 10 and 200 µm, preferably between 20 and 180 µm and more preferably 30 and 150 µm and which wood laminate is preferably obtainable by the above described process.

The wood layers are chosen in view of the intended use and application. Soft wood veneer layers like larch, spruce or pine are considered advantageous in view of compressibility and price, but the invention works very well with relatively hard wood like birch and poplar. In view of strength properties, the wood layers are between 0.5 and 3 mm and preferably successive wood layers are glued together with their grain direction at an angle, typically at right angles. The wood laminate is preferably obtained by the above described process.

The wood laminate according the invention has a water resistance and good wet strength as preferably characterized in that a test specimen of a dimension 25 x 25 mm², after 72 hours boiling has a shear strength exceeding 1 N/mm² as measured in accordance with the standard EN 314, wherein EN 314-1 describes the test procedure and EN 314-2 describes the quality of the adhesion and the requirements. Preferably, the shear strength exceeds 1.1, more preferably 1.2 and even more preferably 1.3 N/mm². The wood laminates meet the class 3 plywood classification in EN 314 test. Therefore, the wood laminate is very suitable for outdoor use and for the manufacture of articles for outdoor use. The wood laminate also has relatively low PF resin content and has low formaldehyde emission and can meet the technical requirements according to formaldehyde emission test ASTM 6007. Therefore, the wood laminate is also very suitable for indoor use. Because the particulate filler comprising non-swellable phyllosilicate material can be less expensive than the binder material and because the adhesive composition can comprise a very large amount of the particulate filler, even up to 90% of the total dry solids, the adhesive composition and thus also the wood laminate can be less expensive without compromising properties.

Because of the very good weather resistance of the wood laminate of the invention, the invention also relates to the use of the wood laminate according to the invention for the manufacture of articles for outdoor use.

Thus, the invention has been described by reference to certain embodiments discussed above. The invention is further illustrated by the following examples.

### EXAMPLES:

### Example series 1:

Plywood boards were manufactures using Birch veneers of the size 500 x 500 x 1.5 mm.

The phenolic resin (PF resin) used was a phenol-formaldehyde solution in water (Primere 14J400 from Metadynea). The solid content of the phenolic resin was 46.4 wt.% (oven measured: 3 hours at 105°C). The viscosity was determined with a plate-plate viscometer at 20°C and a shear rate of 100/s: 340 mPas. The free alkalinity of the PF resin used was 7.0-7.5 wt.%

The particulate filler comprising non-swellable phyllosilicate used in the first series was a Muscovite containing mineral (Aspolit F40 obtained from Aspanger). The particle size distribution shows the following characteristics: d98: 20 µm, d90: 9 µm, d50: 4 µm, d30: 2.5 µm. The elemental composition (expressed in oxides as specified) is: SiO₂: 69.0%, Al₂O₃: 15.5%, K₂O: 6.5%, MgO: 2.8%, Fe₂O₃: 2.0%, TiO₂: 0.5%, and CaO: 0.5%. The elemental composition can be determined by Scanning electron microprobes or X-ray fluorescence analysis. The proportion of pure muscovite in the Aspolit types is between 45% and 65%, typically approximately 50 wt.%. which is independent of the degree of grinding. The remainder is quartz and/or chlorite. Further, chalk and flour powder were added to the adhesive mixture as extender. Adhesive compositions were prepared by mixing the PF resin, the muscovite containing particulate filler and additives in relative amounts as indicated in table 1. The ratio of particulate filler to the total of PF resin and particulate filler (also called the replacement ratio) is 50 wt.%. The indicated wt.% of particulate filler and additives are relative to the total weight of the adhesive composition, the remainder being water.

Plywood boards were made by applying adhesive composition between 9 birch veneer layers, laminating and pressing. The adhesive composition was weighed onto 1 side of the veneer layers except for the last veneer in the stack and distributed equally over the whole surface with a roller. The veneers were laid on top of each other with texture turned by 90° for every 2nd veneer. Within 10 min the 9-layer stack was build up (i.e. the lay-up time) and brought into the pre-heated hot-press. The time before the pile of stacked veneers is put into the hot press (the open time) and pressing begins was 10 minutes. The amount of adhesive composition applied was 155 g/m² in the reference sample and was lower in the examples to raise the total solids content to about the same level as for the reference resin (as indicated in table 1). The pressing was done using conditions chosen to reflect average conditions in a typical plywood mill: Lay-up time: 10 min; Open time: 10 min; Platen temperature: 125°C; Pressing time: 4 + 4 + 1 min; Pressure: 150 / 60 / 30 N/cm².

Specimens per board were cut out with the dimension 25 mm x 25 mm which were used for the strength tests after 72 hours boiling. The standard EN 314 is met when the shear strength is exceeding 1 N/mm². The shear strength was measured using a Zwick testing machine with a Force transducer of 10 kN. The shear strength 72h/100C (in N/mm²) was measured after 72 hours in boiling water at 100°C The results are listed in Table 1.

**Table 1: plywood board composition and testing results**

| **Veneer sample** | **Shear strength 72h/100C** | **% PF solid** | **% phyllosilicate** | **% Chalk** | **% Flour** | **Spread [g/m²]** | **Total Solids content** | **Total solids applied [g/m²]** | **Resin applied [g/m²]** |
|---|---|---|---|---|---|---|---|---|---|
| Ref 1 | 1.29 | 35.03 | 0 | 8.18 | 4.58 | 155.00 | 48 | 74 | 54 |
| E1.1 | 1.43 | 25.02 | 25.02 | 6.40 | 3.56 | 140.00 | 60 | 84 | 35 |
| E1.2 | 1.36 | 24.62 | 24.62 | 6.90 | 3.86 | 130.00 | 60 | 78 | 32 |
| E1.3 | 1.34 | 24.15 | 24.15 | 7.50 | 4.20 | 120.00 | 60 | 72 | 29 |

### Example series 2;

In Example series 2 the bond strength was tested with ABES (Automated Bonding Evaluation System): bonding of 2 veneer stripes with subsequent shear test in function of temperature and pressing time. The adhesive composition only comprises PF resin described above and particulate fillers in an amount of 50 wt.% relative to the total dry weight of the PF resin and the particulate fillers. The particulate fillers used were respectively Reference (no particulate filler), Muscovite type 1, Muscovite type 2, Kaolin and Diatomaceous Earth. Muscovite type 1 (Mica SFG) is a purified muscovite having a muscovite content above 65 wt.%, Muscovite type 2 is un-purified muscovite (Aspolit F30) having a muscovite content of about 50 wt.%. The adhesive composition did not comprise other additives.

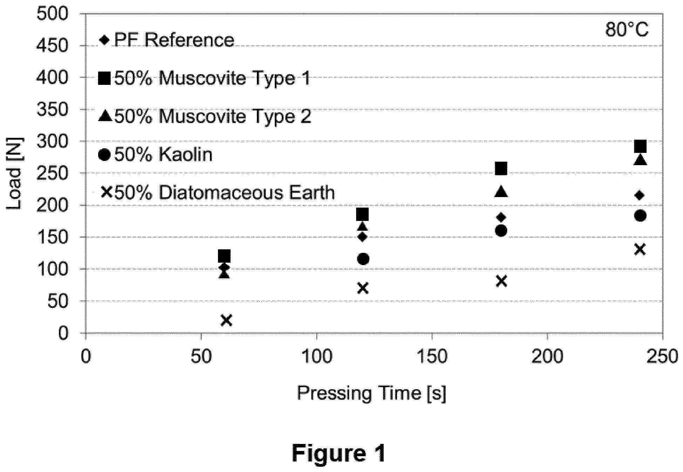

The automatic bonding evaluation system (ABES) was used in order to assess the bond strength development rate as a function of the pressing time. ABES test specimens were prepared by weighing an amount of 15 mg adhesive composition onto a veneer stripe with dimensions: 117.5 mm x 20 mm; 0.5 mm thick and distributed with a second stripe for an overlapping area of 5 x 20 mm. The specimens were pressed for a given time and pulled immediately after pressing to determine the shear strength. For this test a press temperature of 80°C was chosen. Other test conditions are the same as described above. The results are given in Figure 1, showing the shear strength in N as a function of the pressing time.

The results show that adhesive compositions according to the invention with 50% replacement of the PF resin by muscovite-like phyllosilicates are outperforming the PF reference resin and adhesive compositions with other silicates (kaolin and diatomaceous Earth) with the same replacement rate.

### Example series 3:

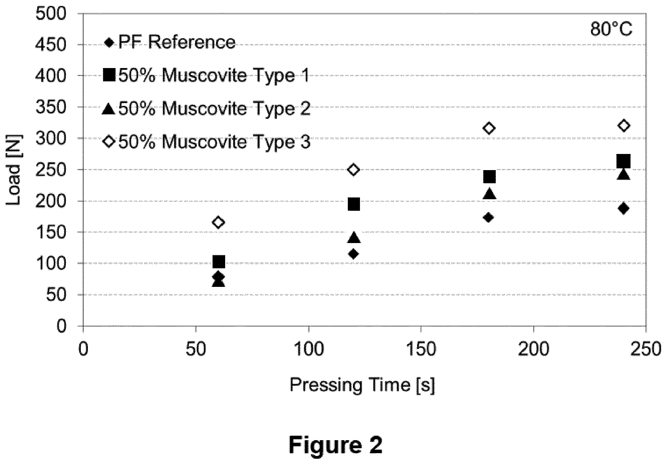

In Example series 3 ABES tests were done as described above in Example series 2 to show the bond strength development of adhesive compositions with muscovite-like phyllosilicates with different average grain sizes compared to a PF reference without additives as a function of the pressing time. Muscovite type 1 has d50 of 6 µm (Mica SFG), Muscovite type 2 has a d50 of 3 µm (Aspolit F30), Muscovite type 3 has d50 of 4 µm (Aspolit F40). The measurements are shown in Figure 2 showing an optimum of the grain size at about 4 µm.

### Example series 4a:

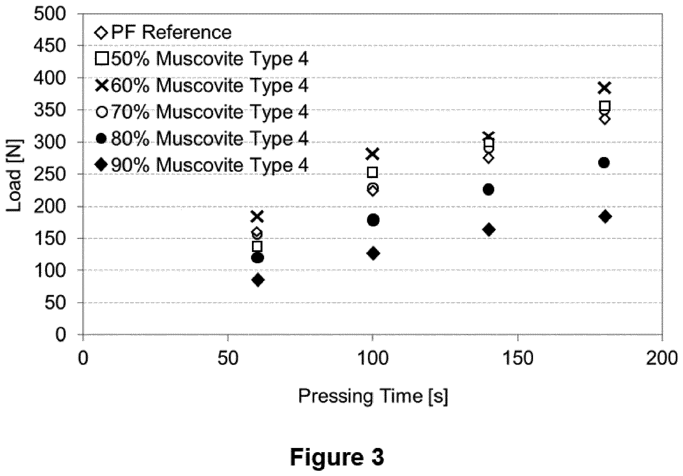

In Example series 4a ABES tests were done as described above in Example series 2 to show the bond strength as function of the pressing time comparing different replacement rates of PF resin by Muscovite type 4 (same as Muscovite type 3 but a different batch of Aspolit F40 also having d50 of 4 µm). The amounts of Muscovite type 4 in the various tested adhesive compositions are 50, 60, 70, 80 and 90 wt.% relative to total weight of PF resin and the Muscovite type 4. The results are shown in Figure 3, showing that the best performance in this series is obtained at a 60 wt.% replacement rate. It is surprising that with the muscovite particulate filler such high wt.% of particulate filler and low wt.% of PF resin can be used without deterioration of the shear strength property and in some instances even an improvement. Interestingly, even 90wt. % replacement of the PF resin by Muscovite type 4 still gave remarkably good results.

### Example series 4b

In Example series 4b tests were done as described above in Example series 1 measuring the shear strength of Plywood boards using a Zwick testing machine comparing different replacement rates of PF resin by Muscovite Aspolit F40 having D50 of 4 µm. The amounts of Muscovite mineral in the various tested adhesive compositions are 35, 50, and 65wt.% relative to total weight of PF resin and the Muscovite mineral. The results are shown below in Table 1b below showing that good results are obtained also at 35 and 65 wt% replacement rate.

### Example series 4c

In Example series 4c tests were done as described above in Example series 1 measuring the shear strength of Plywood boards using a Zwick testing machine comparing different replacement rates of PF resin with Mica SFG60 having D50 of 6 µm. The amount of Muscovite in the examples E4c.1- 3 vary between 10 and 50 wt.% relative to total weight of PF resin and the Muscovite. The results are shown below in Table 1b below showing that replacement rates between 10 and 50% give a very good shear strength.

**Table 1b**

| **Board** | **Shear strength 72h/100C** | **%PF Solid** | **% Silicate** | **Replacement rate [%]** | **% Chalk** | **% Flour** | **% Water** | **Spread [g/m²]** |
|---|---|---|---|---|---|---|---|---|
| E4b.1 | 1.51 | 27.07 | 14.59 | 35 | 6.35 | 3.57 | 48.41 | *155.00* |
| E4b.2 | 1.40 | 23.67 | 23.67 | 50 | 5.56 | 3.13 | 43.97 | *155.00* |
| E4b.3 | 1.39 | 17.84 | 33.13 | 65 | 4.19 | 2.36 | 42.48 | *155.00* |
| C4c.1 | 1.99 | 33.8 | 0 | 0 | 8.17 | 4.68 | 53.35 | *155.00* |
| E4c.1 | 1.77 | 30.42 | 3.38 | 10 | 8.17 | 4.68 | 53.35 | *155.00* |
| E4c.2 | 1.7 | 23.66 | 10.15 | 30 | 8.17 | 4.68 | 53.35 | *155.00* |
| E4c.3 | 1.35 | 16.91 | 16.9 | 50 | 8.17 | 4.68 | 53.35 | *155.00* |

### Example series 5:

Tests were done to compare Muscovite phyllosilicate (Aspolit F40) with other non-swellable phyllosilicates. These can be characterized by their chemical composition and their grain size. Micavi 100 is also a phyllosilicate mica obtained from Veneta Mineraria. Talkum HB-M20B is a talc obtained from PRECHEL GmbH. The conditions for preparing, making and testing the plywood boards were equal to those described in Example 1. Addition of 25.5 wt.% PF solid, 25.5 wt.% Phyllosilicate, 5.8 wt.% Chalk and 3.2 wt.% Flour was the same for all boards. The viscosity of the adhesive composition was 321 mPas as determined with a plate-plate viscometer at 20°C and a shear rate of 100/s. Table 2 shows the measurement results of the plywood boards. The results show that very good shear strength results were obtained with non-swellable phyllosilicates that have a low Average grain size d50 (in µm).

| **Board** | **Shear strength 72h/100C** | **Type Phyllosilicate** | **d50 [µm]** | **Spread [g/m²]** | **Press-time [min]** |
|---|---|---|---|---|---|
| E5.1 | 2.39 | Aspolit F40 | 4 | 140 | 9 |
| C5.2 | 1.06 | Micavi 100 | 50 | 140 | 9 |
| E5.3 | 1.38 | Talkum HB-M20B | 4 | 140 | 9 |

### Example series 6:

Tests were done to compare Muscovite phyllosilicate (Aspolit F40) with montmorillonite. Montmorillonite is a very fine grain phyllosilicate clay which is water swellable. The conditions for preparing, making and testing the plywood boards were equal to those described in Example 1. The amount of the particulate filler in the adhesive composition was also 50 wt.% relative to the total dry weight of the PF resin and the particulate filler. The total solids content of the phenolic resin was 47.2% (oven-measured: 3 hours at 105°C). The viscosity of the adhesive composition was determined to be 380 mPas (with a plate-plate viscometer at 20°C and a shear rate of 100/s). Table 3 shows the composition details and the measurement results of the plywood boards.

**Table 3:**

| **Board** | **Shear strength 72h/100C** | **% PF solid** | **% Musco vite** | **% Montmo rillonite** | **% *Chalk*** | **% Flour** | **Spread [g/m²]** | **Press-time [min]** |
|---|---|---|---|---|---|---|---|---|
| E6a | 1.83 | 25.50 | 25.50 | 0 | 5.8 | 3.2 | 140.00 | 9 |
| E6b | 1.88 | 25.50 | 25.50 | 0 | 5.8 | 3.2 | 140.00 | 7 |
| CE6a | 1.50 | 25.50 | 0 | 25.50 | 5.8 | 3.2 | 140.00 | 9 |
| CE6b | 1.31 | 25.50 | 0 | 25.50 | 5.8 | 3.2 | 140.00 | 7 |

The comparative example shows that the adhesive composition according to the invention results in significant better shear strength than the adhesive compositions comprising montmorillonite in the same amount.

### Example series 7:

Tests were done with muscovite type mineral Aspolit F40, F100, G200 and G400 and another muscovite type of mineral having different particle sizes. Getrockneter Schlicker is a muscovite mineral prepared by grinding in water to prepare a slurry and separating from the slurry a particle size fraction with d50 of 38 micron. The conditions for preparing, making and testing the plywood boards were equal to those described in Example 1. The amount of the particulate filler in the adhesive composition was 50 wt.% relative to the total dry weight of the PF resin and the particulate filler. The amount of adhesive composition applied was 140 gr/m². The shear strength of the plywood boards was measured as described above. The composition features and test results are summarized in Table 4. The tests show that good results can be obtained with muscovite phyllosilicates having a particle size up to 40 micrometer and very good results are also obtained at replacement rate of 50% with phyllosilicates having a particle size up to 20 micron. Examples with phyllosilicates having a particle size above 20 micron are not part of the present invention.

**Table 4.**

| Silicate type | D50 | Replacement rate of PF | Shear strength [N/mm2] after 72 h boiling |
|---|---|---|---|
| Aspolit F40 | 4 µm | 50% | 1.44 |
| Aspolit F100 | 10 µm | 50% | 1,34 |
| Aspolit G200 | 18 µm | 50% | 1.34 |
| Aspolit G400 | 24 µm | 50% | 1.19 |
| Getr. Schlicker | 38 µm | 50% | 1.17 |
| Montmorillonite | 99.9% < 45 µm | 50% | Binder mix swollen → too viscous paste |

Thus, the invention has been described by reference to certain embodiments discussed above. Although specific embodiments have been described, these are examples only and are not limiting upon the scope of the invention, which is specified in the claims.

## Claims

1. An adhesive composition for the manufacture of a wood laminate comprising two or more wood layers alternating with adhesive layers, wherein the adhesive composition comprises a phenol formaldehyde adhesive resin solution in water and a particulate filler comprising a non-swellable phyllosilicate, the particulate filler having an average grain size d50 (determined by a Micromeretics Sedigraph 5120) ranging between 1 and 20 µm, preferably between 2 and 15 µm and more preferably between 3 and 10 µm, the adhesive composition comprising an amount of between 20 and 80 wt.%, preferably between 30 and 80 wt.%, more preferably between 40 and 80 wt.% even more preferably between 40 and 70 wt.% of the particulate filler relative to the total dry solids weight of the particulate filler and the adhesive resin.

2. The adhesive composition according to claim 1, wherein the non-swellable phyllosilicate is a natural- or synthetic non-swellable mica or talc, preferably natural mica chosen from the group consisting of muscovite, phlogopite, iron mica, biotite and sericite or artificial mica chosen from the group consisting of fluorine phlogopite mica, potassium tetra-silicon mica and calcined natural mica, more preferably the non-swellable phyllosilicate is muscovite and phlogopite and most preferably muscovite.

3. The adhesive composition according to claims 1 or 2, wherein the particulate filler is a mineral material comprising at least 20 wt.%, preferably at least 30 wt.%, more preferably at least 50 wt.%, even more preferably at least 70 wt.% of the non-swellable phyllosilicate and optionally other mineral co-components, preferably non-swellable mineral co-components.

4. The adhesive composition according to anyone of claims 1 - 3, wherein the phyllosilicate in the particulate filler is a muscovite comprising 40 - 80 wt.% SiO₂, 10 - 40 wt.% Al₂O₃, 4 - 10% K₂O, preferably the particulate filler is a phengite.

5. The adhesive composition according to anyone of claims 1 - 4, wherein the particle size distribution of the particulate filler as determined by a Micromeretics Sedigraph 5120 is **characterized by** a d98 between 15 and 25 µm, a d90 between 5 and 15 µm, a d50 between 2 and 20 µm and a d30 between 1 and 5 µm.

6. The adhesive composition according to anyone of claims 1 - 5, wherein the adhesive composition comprises a phenol formaldehyde resin solution in water
a) having a dry solids weight of phenol formaldehyde resin relative to the total weight of the resin and water is between 30 and 70 wt.%, preferably between 35 and 60 wt.%, more preferably between 40 and 55 wt.% (measured after 3 hours oven drying at 105°C),
b) having a free alkalinity between 3 and 10 wt.% preferably between 4 and 9 wt.% and more preferably between 5 and 8 wt.% as determined by acid titration and expressed as gr NaOH per 100 gr of the adhesive composition x 100%.
c) having a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s.

7. The adhesive composition according to anyone of claims 1 - 6, consisting of the particulate filler and the phenol formaldehyde resin solution in water and one or more optional additives in a total amount ranging between 0 and 30 wt.%, preferably between 0 and 20 wt.%, more preferably between 1 and 20 wt.% relative to the total weight of the adhesive composition, wherein the further additives are preferably chosen from the list consisting of other fillers, pigments, hardeners, curing catalyst, preferably one or more further additives chosen from the list consisting of starch, wood flour, nutshell flour, chalk.

8. The adhesive composition according to anyone of claims 1 - 7, having a viscosity in the range between 300 and 500 mPas.

9. A process for the manufacture of the adhesive composition according to anyone of claims 1 - 8, comprising the steps of
I. providing a phenol formaldehyde resin solution in water
a) wherein the dry solids weight of phenol formaldehyde resin relative to the total weight of the resin and water is between 30 and 70 wt.%, preferably between 35 and 60 wt.%, more preferably between 40 and 55 wt.% (measured after 3 hours oven drying at 105°C),
b) having a free alkalinity between 3 and 10 wt.%, preferably between 4 and 9 wt.% and more preferably between 5 and 8 wt.% as determined by acid titration and expressed as gr NaOH per 100 gr of the adhesive composition x 100%,
c) having a viscosity preferably between 100 and 2000 mPas, more preferably between 150 - 1700 mPas even more preferably between 200 - 1500 mPas wherein the viscosity is measured with cone/plate Viscometer (Anton Paar MCR-51) with a spindle of 49.978 mm diameter, 0.992° angle and 99 µm truncation at 20°C and a shear rate of 100/s,
II. providing particulate filler comprising a non-swellable phyllosilicate, the particulate filler having an average grain size d50 (determined by a Micromeritics sedigraph 5120) ranging between 1 and 20 µm,preferably between 2 and 15 µm and more preferably between 3 and 10 µm,
III. optionally providing additives in a total amount of no more than 30 wt.% relative to the total weight of the adhesive composition,
IV. mixing the phenol formaldehyde resin solution with the particulate filler and optional additives in relative amounts such that the adhesive composition comprises an amount between 20 and 80 wt.%, preferably between 30 and 80 wt.%, more preferably between 40 and 80 wt.% even more preferably between 40 and 70 wt.% of the particulate filler relative to the total dry solids weight of the adhesive resin and particulate filler.

10. Use of the adhesive composition according to claims 1- 8 for the manufacture of a wood laminate comprising two or more wood layers alternating with adhesive layers, wherein the wood laminate is a veneer wherein the wood layers are between 0.5 and 3 mm thick.

11. A process for the manufacture of a wood laminate comprising the step of
a. providing two or more wood layers, which wood layers are between 0.5 and 3 mm thick,
b. providing the adhesive composition according to anyone of claims 1-8,
c. applying one or more layers of the adhesive composition on at least one surface of the two or more wood layers,
a. in an amount of between 100 and 200 gr/m², preferably between 100 and 160 gr/m², more preferably between 110 and 160 gr/m², even more preferably between 100 and 140 gr/m²,
d. stacking the two or more wood layers alternating with the one or more adhesive layers forming an uncured wood laminate stack,
e. optionally allowing the adhesive composition to penetrate into the wood and partially dry,
a. preferably for at least 5, 7 or at least 10 minutes,
f. pressing and curing the uncured wood laminate stack to form the wood laminate in one or more separate pressing steps,
a. at a pressing temperature between 90 and 150 °C, preferably between 100 and 140 °C, more preferably between 110 and 140 °C,
b. preferably at a pressure between 10 and 200 N/cm² and
c. preferably for a total time of at least 2 minutes,
d. wherein the pressing is preferably done at constant temperature and with at least one step at a pressure between 100 and 200 N/cm² for at least 2 minutes.

12. A wood laminate obtainable by the process of claim 11.

13. A wood laminate comprising two or more wood layers alternated with one or more adhesive layers of the dried and cured adhesive composition according to anyone of claims 1 - 8, wherein the dried and cured adhesive layer has an average thickness between 10 and 200 µm, preferably between 20 and 180 µm and more preferably 30 and 150 µm.

14. The wood laminate according to claim 12 or 13, **characterised in that** a test specimen of a dimension 25 x 25 mm², after 72 hours boiling has a shear strength exceeding 1 N/mm², preferably exceeding 1.1 N/mm², more exceeding 1.2 N/mm² and most preferably exceeding 1.3 N/mm² as measured in accordance with the standard EN 314 and meets the class 3 plywood classification and preferably meeting the technical requirements according to formaldehyde emission test ASTM 6007.

15. The wood laminate according to anyone of claims 12 to 14, wherein the wood laminate is a veneer wherein the wood layers are between 0.5 and 3 mm thick and wherein preferably successive wood layers are glued together with their grain direction at an angle, preferably at right angles.

16. Use of the wood laminate according to anyone of claims 12 - 15 for the manufacture of articles for outdoor use.

## Patentansprüche

1. Klebstoffzusammensetzung für die Herstellung eines Holzlaminats, umfassend zwei oder mehr Holzschichten, die sich mit Klebstoffschichten abwechseln, wobei die Klebstoffzusammensetzung eine Phenol-Formaldehyd-Klebstoffharzlösung in Wasser und einen partikulären Füllstoff umfasst, umfassend ein nicht quellbares Phyllosilikat, wobei der partikuläre Füllstoff eine durchschnittliche Korngröße d50 (bestimmt durch einen Micromeretics Sedigraph 5120) im Bereich zwischen 1 und 20 µm, vorzugsweise zwischen 2 und 15 µm und mehr bevorzugt zwischen 3 und 10 µm aufweist, die Klebstoffzusammensetzung umfassend eine Menge zwischen 20 und 80 Gew.-%, vorzugsweise zwischen 30 und 80 Gew.-%, mehr bevorzugt zwischen 40 und 80 Gew.-%, noch mehr bevorzugt zwischen 40 und 70 Gew.-% des partikulären Füllstoffs relativ zu dem Gesamttrockenfeststoffgewicht des partikulären Füllstoffs und des Klebstoffharzes.

2. Klebstoffzusammensetzung nach Anspruch 1, wobei das nicht quellbare Phyllosilikat ein natürlicher oder synthetischer nicht quellbarer Glimmer oder Talk, vorzugsweise natürlicher Glimmer, der aus der Gruppe ausgewählt ist, bestehend aus Muskovit, Phlogopit, Eisenglimmer, Biotit und Sericit, oder künstlicher Glimmer ist, der aus der Gruppe ausgewählt ist, bestehend aus Fluorphlogopitglimmer, Kaliumtetrasiliziumglimmer und kalziniertem natürlichem Glimmer, mehr bevorzugt das nicht quellbare Phyllosilikat Muskovit und Phlogopit und am meisten bevorzugt Muskovit ist.

3. Klebstoffzusammensetzung nach den Ansprüchen 1 oder 2, wobei der partikuläre Füllstoff ein mineralisches Material ist, umfassend mindestens zu 20 Gew.-%, vorzugsweise mindestens zu 30 Gew.-%, mehr bevorzugt mindestens zu 50 Gew.-%, noch mehr bevorzugt mindestens zu 70 Gew.-% das nicht quellbare Phyllosilikat und optional andere mineralische Cokomponenten, vorzugsweise nicht quellbare mineralische Cokomponenten.

4. Klebstoffzusammensetzung nach einem der Ansprüche 1 bis 3, wobei das Phyllosilikat in dem partikulären Füllstoff ein Muskovit ist, umfassend zu 40 - 80 Gew.-% SiO₂, zu 10 - 40 Gew.-% Al₂O₃, zu 4 - 10 % K₂O; vorzugsweise der partikuläre Füllstoff ein Phengit ist.

5. Klebstoffzusammensetzung nach einem der Ansprüche 1 bis 4, wobei die Partikelgrößenverteilung des partikulären Füllstoffs, wie bestimmt durch einen Micromeretics Sedigraph 5120, **gekennzeichnet ist durch** eine d98 zwischen 15 und 25 µm, eine d90 zwischen 5 und 15 µm, eine d50 zwischen 2 und 20 µm und eine d30 zwischen 1 und 5 µm.

6. Klebstoffzusammensetzung nach einem der Ansprüche 1 bis 5, wobei die Klebstoffzusammensetzung eine Phenol-Formaldehyd-Harzlösung in Wasser umfasst,
a) die ein Trockenfeststoffgewicht des Phenol-Formaldehyd-Harzes relativ zu dem Gesamtgewicht des Harzes und des Wassers aufweist, das zwischen 30 und 70 Gew.-%, vorzugsweise zwischen 35 und 60 Gew.-%, mehr bevorzugt zwischen 40 und 55 Gew.-% liegt (gemessen nach 3 Stunden Ofentrocknung bei 105 °C),
b) die eine freie Alkalität zwischen 3 und 10 Gew.-%, vorzugsweise zwischen 4 und 9 Gew.-% und mehr bevorzugt zwischen 5 und 8 Gew.-% aufweist, wie bestimmt durch Säuretitration und ausgedrückt als g NaOH pro 100 g der Klebstoffzusammensetzung x 100 %.
c) die eine Viskosität vorzugsweise zwischen 100 und 2000 mPas, mehr bevorzugt zwischen 150 - 1700 mPas, noch mehr bevorzugt zwischen 200 - 1500 mPas aufweist, wobei die Viskosität mit einem Kegel/Platte-Viskosimeter (Anton Paar MCR-51) mit einer Spindel von 49,978 mm Durchmesser, 0,992° Winkel und 99 µm Trunkierung bei 20 °C und einer Schergeschwindigkeit von 100/s gemessen wird.

7. Klebstoffzusammensetzung nach einem der Ansprüche 1 bis 6, bestehend aus dem partikulären Füllstoff und der Phenol-Formaldehyd-Harzlösung in Wasser und einem oder mehreren optionalen Additiven in einer Gesamtmenge im Bereich zwischen 0 und 30 Gew.-%, vorzugsweise zwischen 0 und 20 Gew.-%, mehr bevorzugt zwischen 1 und 20 Gew.-%, relativ zu dem Gesamtgewicht der Klebstoffzusammensetzung, wobei die weiteren Additive vorzugsweise aus der Liste ausgewählt sind, bestehend aus anderen Füllstoffen, Pigmenten, Härtern, Aushärtungskatalysatoren, vorzugsweise ein oder mehrere weitere Additive aus der Liste ausgewählt sind, bestehend aus Stärke, Holzmehl, Nussschalenmehl, Kreide.

8. Klebstoffzusammensetzung nach einem der Ansprüche 1 bis 7, die eine Viskosität im Bereich zwischen 300 und 500 mPas aufweist.

9. Verfahren für die Herstellung der Klebstoffzusammensetzung nach einem der Ansprüche 1 bis 8, umfassend die Schritte
I. Bereitstellen einer Phenol-Formaldehyd-Harzlösung in Wasser
a) wobei das Trockenfeststoffgewicht von Phenol-Formaldehyd-Harz relativ zu dem Gesamtgewicht des Harzes und des Wassers zwischen 30 und 70 Gew.-%, vorzugsweise zwischen 35 und 60 Gew.-%, mehr bevorzugt zwischen 40 und 55 Gew.-% liegt (gemessen nach 3 Stunden Ofentrocknung bei 105 °C),
b) die eine freie Alkalität zwischen 3 und 10 Gew.-%, vorzugsweise zwischen 4 und 9 Gew.-% und mehr bevorzugt zwischen 5 und 8 Gew.-% aufweist, wie bestimmt durch Säuretitration und ausgedrückt als g NaOH pro 100 g der Klebstoffzusammensetzung x 100 %,
c) die eine Viskosität vorzugsweise zwischen 100 und 2000 mPas, mehr bevorzugt zwischen 150 - 1700 mPas, noch mehr bevorzugt zwischen 200 - 1500 mPas aufweist, wobei die Viskosität mit einem Kegel/Platte-Viskosimeter (Anton Paar MCR-51) mit einer Spindel von 49,978 mm Durchmesser, 0,992° Winkel und 99 µm Trunkierung bei 20 °C und einer Schergeschwindigkeit von 100/s gemessen wird,
II. Bereitstellen eines partikulären Füllstoffs, umfassend ein nicht quellbares Phyllosilikat, wobei der partikuläre Füllstoff eine durchschnittliche Korngröße d50 (bestimmt durch einen Micromeritics Sedigraph 5120) im Bereich zwischen 1 und 20 µm, vorzugsweise zwischen 2 und 15 µm und mehr bevorzugt zwischen 3 und 10 µm aufweist,
III. optional Bereitstellen von Additiven in einer Gesamtmenge von nicht mehr als 30 Gew.-%, relativ zu dem Gesamtgewicht der Klebstoffzusammensetzung,
IV. Mischen der Phenol-Formaldehyd-Harzlösung mit dem partikulären Füllstoff und optionalen Additiven in relativen Mengen derart, dass die Klebstoffzusammensetzung eine Menge zwischen 20 und 80 Gew.-%, vorzugsweise zwischen 30 und 80 Gew.-%, mehr bevorzugt zwischen 40 und 80 Gew.-% und noch mehr bevorzugt zwischen 40 und 70 Gew.-% des partikulären Füllstoffs relativ zu dem Gesamttrockenfeststoffgewicht des Klebstoffharzes und des partikulären Füllstoffs umfasst.

10. Verwendung der Klebstoffzusammensetzung nach den Ansprüchen 1 bis 8 für die Herstellung eines Holzlaminats, umfassend zwei oder mehr Holzschichten, die sich mit Klebstoffschichten abwechseln, wobei das Holzlaminat ein Furnier ist, bei dem die Holzschichten zwischen 0,5 und 3 mm dick sind.

11. Verfahren für die Herstellung eines Holzlaminats, umfassend den Schritt
a. Bereitstellen von zwei oder mehr Holzschichten, wobei die Holzschichten zwischen 0,5 und 3 mm dick sind,
b. Bereitstellen der Klebstoffzusammensetzung nach einem der Ansprüche 1 bis 8,
c. Auftragen einer oder mehrerer Schichten der Klebstoffzusammensetzung auf mindestens eine Oberfläche der zwei oder mehr Holzschichten,
a. in einer Menge zwischen 100 und 200 g/m², vorzugsweise zwischen 100 und 160 g/m², mehr bevorzugt zwischen 110 und 160 g/m², noch mehr bevorzugt zwischen 100 und 140 g/m²,
d. Stapeln der zwei oder mehr Holzschichten, die sich mit der einen oder mehreren Klebstoffschichten abwechseln, wobei ein nicht ausgehärteter Holzlaminatstapel ausgebildet wird,
e. optional Ermöglichen, dass die Klebstoffzusammensetzung in das Holz eindringt und teilweise trocknet,
a. vorzugsweise mindestens 5, 7 oder mindestens 10 Minuten lang,
f. Pressen und Aushärten des nicht ausgehärteten Holzlaminatstapels, um das Holzlaminat auszubilden, in einem oder mehreren separaten Pressschritten,
a. bei einer Presstemperatur zwischen 90 und 150 °C, vorzugsweise zwischen 100 und 140 °C, mehr bevorzugt zwischen 110 und 140 °C,
b. vorzugsweise bei einem Druck zwischen 10 und 200 N/cm² und
c. vorzugsweise für eine Gesamtdauer von mindestens 2 Minuten,
d. wobei das Pressen vorzugsweise bei konstanter Temperatur und mit mindestens einem Schritt bei einem Druck zwischen 100 und 200 N/cm² mindestens 2 Minuten lang durchgeführt wird.

12. Holzlaminat, das durch das Verfahren nach Anspruch 11 erhältlich ist.

13. Holzlaminat, umfassend zwei oder mehr Holzschichten, die sich mit einer oder mehreren Klebstoffschichten der getrockneten und ausgehärteten Klebstoffzusammensetzung nach einem der Ansprüche 1 bis 8 abwechseln, wobei die getrocknete und ausgehärtete Klebstoffschicht eine durchschnittliche Dicke zwischen 10 und 200 µm, vorzugsweise zwischen 20 und 180 µm und mehr bevorzugt zwischen 30 und 150 µm aufweist.

14. Holzlaminat nach Anspruch 12 oder 13, **dadurch gekennzeichnet, dass** ein Probekörper mit einer Abmessung 25 x 25 mm² nach 72 Stunden Kochen eine Scherfestigkeit von über 1 N/mm², vorzugsweise über 1,1 N/mm², mehr über 1,2 N/mm² und am meisten bevorzugt über 1,3 N/mm² aufweist, wie gemessen gemäß der Norm EN 314, und der Sperrholzklassifizierung 3 entspricht und vorzugsweise die technischen Anforderungen nach dem Formaldehydemissionstest ASTM 6007 erfüllt.

15. Holzlaminat nach einem der Ansprüche 12 bis 14, wobei das Holzlaminat ein Furnier ist, wobei die Holzschichten zwischen 0,5 und 3 mm dick sind und wobei vorzugsweise aufeinanderfolgende Holzschichten mit ihrer Faserrichtung in einem Winkel, vorzugsweise in rechten Winkeln, zusammengeleimt sind.

16. Verwendung des Holzlaminats nach einem der Ansprüche 12 bis 15 für die Herstellung von Gegenständen für einen Einsatz im Freien.

## Revendications

1. Composition adhésive pour la fabrication d'un stratifié de bois comprenant deux couches de bois ou plus en alternance avec des couches d'adhésif, dans laquelle la composition adhésive comprend une solution de résine adhésive phénol-formaldéhyde dans de l'eau et une charge particulaire comprenant un phyllosilicate non gonflable, la charge particulaire ayant une taille de grain moyenne d50 (déterminée par un sédigraphe Micromeritics 5120) comprise dans une plage entre 1 et 20 µm, de préférence entre 2 et 15 µm et plus préférablement entre 3 et 10 µm, la composition adhésive comprenant une quantité comprise entre 20 et 80 % en poids, de préférence entre 30 et 80 % en poids, plus préférablement entre 40 et 80 % en poids, encore plus préférablement entre 40 et 70 % en poids de la charge particulaire par rapport au poids total de matières sèches solides de la charge particulaire et de la résine adhésive.

2. Composition adhésive selon la revendication 1, dans laquelle le phyllosilicate non gonflable est un mica ou un talc non gonflable naturel ou synthétique, de préférence un mica naturel choisi dans le groupe constitué de muscovite, phlogopite, mica de fer, biotite et séricite ou un mica artificiel choisi dans le groupe constitué de mica phlogopite fluoré, mica tétra-silicium potassique et mica naturel calciné, plus préférablement le phyllosilicate non gonflable est une muscovite et une phlogopite, et le plus préférablement une muscovite.

3. Composition adhésive selon les revendications 1 ou 2, dans laquelle la charge particulaire est un matériau minéral comprenant au moins 20 % en poids, de préférence au moins 30 % en poids, plus préférablement au moins 50 % en poids, encore plus préférablement au moins 70 % en poids du phyllosilicate non gonflable et facultativement d'autres co-composants minéraux, de préférence des co-composants minéraux non gonflables.

4. Composition adhésive selon l'une quelconque des revendications 1 à 3, dans laquelle le phyllosilicate dans la charge particulaire est une muscovite comprenant 40 à 80 % en poids de SiOz, 10 à 40 % en poids d'Al₂O₃, 4 à 10 % de K₂O, de préférence la charge particulaire est une phengite.

5. Composition adhésive selon l'une quelconque des revendications 1 à 4, dans laquelle la distribution granulométrique de la charge particulaire telle que déterminée par un sédigraphe Micromeritics 5120 est **caractérisée par** un d98 compris entre 15 et 25 µm, un d90 compris entre 5 et 15 µm, un d50 compris entre 2 et 20 µm et un d30 compris entre 1 et 5 µm.

6. Composition adhésive selon l'une quelconque des revendications 1 à 5, dans laquelle la composition adhésive comprend une solution de résine phénol-formaldéhyde dans de l'eau
a) ayant un poids de matières solides sèches de résine phénol-formaldéhyde par rapport au poids total de la résine et de l'eau compris entre 30 et 70 % en poids, de préférence entre 35 et 60 % en poids, plus préférablement entre 40 et 55 % en poids (mesuré après 3 heures de séchage en étuve à 105 °C),
b) ayant une alcalinité libre comprise entre 3 et 10 % en poids, de préférence entre 4 et 9 % en poids, et plus préférablement entre 5 et 8 % en poids, telle que déterminée par titrage acide et exprimée en g de NaOH pour 100 g de la composition adhésive x 100 %.
c) ayant une viscosité comprise de préférence entre 100 et 2000 mPas, plus préférablement entre 150 et 1700 mPas, encore plus préférablement entre 200 et 1500 mPas, dans laquelle la viscosité est mesurée avec un viscosimètre à cône/plaque (Anton Paar MCR-51) avec un mobile de 49,978 mm de diamètre, un angle de 0,992° et une troncature de 99 µm à 20 °C et un taux de cisaillement de 100/s.

7. Composition adhésive selon l'une quelconque des revendications 1 à 6, constituée de la charge particulaire et de la solution de résine phénol-formaldéhyde dans de l'eau et d'un ou plusieurs additifs facultatifs dans une quantité totale comprise dans une plage entre 0 et 30 % en poids, de préférence entre 0 et 20 % en poids, plus préférablement entre 1 et 20 % en poids par rapport au poids total de la composition adhésive, dans laquelle les additifs supplémentaires sont de préférence choisis dans la liste constituée d'autres charges, pigments, durcisseurs, catalyseur de durcissement, de préférence un ou plusieurs additifs supplémentaires choisis dans la liste constituée d'amidon, farine de bois, farine de coquille de noix, craie.

8. Composition adhésive selon l'une quelconque des revendications 1 à 7, ayant une viscosité comprise dans la plage entre 300 et 500 mPas.

9. Procédé pour la fabrication de la composition adhésive selon l'une quelconque des revendications 1 à 8, comprenant les étapes consistant à
I. fournir une solution de résine phénol-formaldéhyde dans de l'eau
a) dans lequel le poids de matières solides sèches de la résine phénol-formaldéhyde par rapport au poids total de la résine et de l'eau est compris entre 30 et 70 % en poids, de préférence entre 35 et 60 % en poids, plus préférablement entre 40 et 55 % en poids (mesuré après 3 heures de séchage en étuve à 105 °C),
b) ayant une alcalinité libre comprise entre 3 et 10 % en poids, de préférence entre 4 et 9 % en poids et plus préférablement entre 5 et 8 % en poids, telle que déterminée par titrage acide et exprimée en g de NaOH pour 100 g de la composition adhésive x 100 %,
c) ayant une viscosité comprise de préférence entre 100 et 2000 mPas, plus préférablement entre 150 et 1700 mPas, encore plus préférablement entre 200 et 1500 mPas, dans lequel la viscosité est mesurée avec un viscosimètre à cône/plaque (Anton Paar MCR-51) avec un mobile de 49,978 mm de diamètre, un angle de 0,992° et une troncature de 99 µm à 20 °C et un taux de cisaillement de 100/s,
II. fournir une charge particulaire comprenant un phyllosilicate non gonflable, la charge particulaire ayant une taille moyenne de grain d50 (déterminée par un sédigraphe Micromeritics 5120) comprise dans une plage entre 1 et 20 µm, de préférence entre 2 et 15 µm et plus préférablement entre 3 et 10 µm,
III. facultativement, fournir des additifs dans une quantité totale ne dépassant pas 30 % en poids par rapport au poids total de la composition adhésive,
IV. mélanger la solution de résine phénol-formaldéhyde avec la charge particulaire et des additifs facultatifs dans des quantités relatives telles que la composition adhésive comprend une quantité comprise entre 20 et 80 % en poids, de préférence entre 30 et 80 % en poids, plus préférablement entre 40 et 80 % en poids, encore plus préférablement entre 40 et 70 % en poids de la charge particulaire par rapport au poids total de matières solides sèches de la résine adhésive et de la charge particulaire.

10. Utilisation de la composition adhésive selon les revendications 1 à 8 pour la fabrication d'un stratifié de bois comprenant deux couches de bois ou plus en alternance avec des couches d'adhésif, dans laquelle le stratifié de bois est un placage, les couches de bois ayant une épaisseur comprise entre 0,5 et 3 mm.

11. Procédé pour la fabrication d'un stratifié de bois comprenant l'étape consistant à
a. fournir deux couches de bois ou plus, lesquelles couches de bois ayant une épaisseur comprise entre 0,5 et 3 mm,
b. fournir la composition adhésive selon l'une quelconque des revendications 1 à 8,
c. appliquer une ou plusieurs couches de la composition adhésive sur au moins une surface des deux couches de bois ou plus,
a. dans une quantité comprise entre 100 et 200 g/m², de préférence entre 100 et 160 g/m², plus préférablement entre 110 et 160 g/m², encore plus préférablement entre 100 et 140 g/m²,
d. empiler les deux couches de bois ou plus en alternance avec la ou les couches d'adhésif pour former un empilement de stratifié de bois non durci,
e. facultativement, laisser la composition adhésive pénétrer dans le bois et sécher partiellement,
a. de préférence pendant au moins 5, 7 ou au moins 10 minutes,
f. presser et durcir l'empilement de stratifié de bois non durci pour former le stratifié de bois en une ou plusieurs étapes de pressage distinctes,
a. à une température de pressage comprise entre 90 et 150 °C, de préférence entre 100 et 140 °C, plus préférablement entre 110 et 140 °C,
b. de préférence à une pression comprise entre 10 et 200 N/cm² et
c. de préférence pendant une durée totale d'au moins 2 minutes,
d. dans lequel le pressage se fait de préférence à température constante et avec au moins une étape à une pression comprise entre 100 et 200 N/cm² pendant au moins 2 minutes.

12. Stratifié de bois pouvant être obtenu par le procédé selon la revendication 11.

13. Stratifié de bois comprenant deux couches de bois ou plus en alternance avec une ou plusieurs couches adhésives de la composition adhésive séchée et durcie selon l'une quelconque des revendications 1 à 8, dans lequel la couche adhésive séchée et durcie a une épaisseur moyenne comprise entre 10 et 200 µm, de préférence entre 20 et 180 µm et plus préférablement entre 30 et 150 µm.

14. Stratifié de bois selon la revendication 12 ou 13, **caractérisé en ce qu'**un échantillon d'essai d'une dimension de 25 x 25 mm², après 72 heures de cuisson, présente une résistance au cisaillement supérieure à 1 N/mm², de préférence supérieure à 1,1 N/mm², plus supérieure à 1,2 N/mm² et le plus préférablement supérieure à 1,3 N/mm², telle que mesurée conformément à la norme EN 314, et répond à la classification des contreplaqués de classe 3 et, de préférence, répond aux exigences techniques selon l'essai d'émission de formaldéhyde ASTM 6007.

15. Stratifié de bois selon l'une quelconque des revendications 12 à 14, dans lequel le stratifié de bois est un placage dans lequel les couches de bois ont une épaisseur comprise entre 0,5 et 3 mm et dans lequel, de préférence, des couches de bois successives sont collées les unes aux autres avec le fil du bois à un certain angle, de préférence à angle droit.

16. Utilisation du stratifié de bois selon l'une quelconque des revendications 12 à 15 pour la fabrication d'articles destinés à être utilisés à l'extérieur.
